# EUROPEAN PATENT APPLICATION

(11) **EP 3 636 972 A1**
(43) Date of publication of application: **15.04.2020**
(21) Application number: 18199751.1
(22) Date of filing: 10.10.2018
(51) Int. Cl.: F16K 11/076, A47L 15/42, F16K 11/20, F16K 11/24, D06F 39/08

(54) **MULTI-WAY DIVERTER VALVE FOR A DISHWASHER**

(71) Applicant: Whirlpool Corporation, Benton Harbor, MI 49022 (US)
(72) Inventor: Kepinska, Justyna Zuzanna, 21024 Biandronno - Frazione Cassinetta (VA) (IT); Markiewicz, Bartlomiej Stanislaw, 21024 Biandronno - Frazione Cassinetta (VA) (IT); Rejdych, Rafal, 21024 Biandronno - Frazione Cassinetta (VA) (IT); Vallejo, Alvaro, 21024 Biandronno - Frazione Cassinetta (VA) (IT); Varvate, Subhash Nivrutti, 21024 Biandronno - Frazione Cassinetta (VA) (IT); Wolowicz, Mateusz Michal, 21024 Biandronno - Frazione Cassinetta (VA) (IT)
(74) Representative: Spina, Alessandro

(57) **Abstract**

Multi-way diverter valve (110), suitable for a dishwasher, comprising a housing (112) defining a chamber (122) and having an inlet (153) and at least three outlets (154, 156, 158) fluidly coupled to the chamber (122), and further having doors (210, 212), one less in number than the number of the at least three outlets, and moveable relative to the outlets (154, 156, 158), and actuators (248, 250) coupled to a corresponding, but different, door (210, 212) to move the door (210, 212) to selectively block adjacent outlets (154, 156, 158) of the at least three outlets (154, 156, 158). The multi-way valve housing (112) may have a peripheral side wall (121), whereby the inlet (153) and the at least three outlets (154, 156, 158) are located in and radially spaced along the periheral side wall (121).

## Description

### FIELD OF DISCLOSURE

This disclosure relates generally to diverter valves, and, more particularly, to water diverter valves in dishwashing appliances.

### BACKGROUND

Dishwashers typically include a tub defining a treating chamber into which dishes are placed to undergo a washing or treating operation. Dishwashers include spray systems having one or more sprayers, which are supplied with liquid by supply conduits. Wash liquid is recirculated through the treating chamber by a wash pump which fluidly couples the treating chamber to the supply conduits. A diverter valve is provided to selectively route the pump output to the supply conduits.

### BRIEF DESCRIPTION

In one aspect, the disclosure relates to a multi-way diverter valve comprising a housing having a peripheral side wall defining an inner chamber, with an inlet and at least first, second, and third outlets located in and radially spaced along the peripheral side wall. First and second doors located within and radially mounted to the housing. A first actuator operably coupled to the first door to move the first door between a first position, where the first door blocks the second outlet, and a second position, where the first door blocks the first outlet. A second actuator operably coupled to the second door to move the second door between a third position, where the second door blocks the third outlet, and a fourth position, where the second door blocks the second outlet. Whereby the first and second actuators can be selectively actuated such that: the first door is in the first position and the second door is in the third position to collectively open the first outlet while blocking the second and third outlets, the first door is in the second position and the second door is in the third position to collectively open the second outlet while blocking the first and third outlets, and the first door is in the second position and the second door is in the fourth position to collectively open the third outlet while blocking the first and second outlets.

In another aspect, the disclosure relates to a multi-way diverter valve comprising a housing defining a chamber and having an inlet and at least three outlets fluidly coupled to the chamber; doors, one less in number than the number of the at least three outlets, and moveable relative to the at least three outlets; and actuators, corresponding in number to the number of doors, with each actuator operably coupled to a corresponding, but different, door to move the corresponding door to selectively block adjacent outlets of the at least three outlets, whereby the doors are located such that selectively actuation of the actuators can result in any one of the outlets being open while the other outlets are blocked by the doors.

### BRIEF DESCRIPTION OF THE DRAWINGS

In the drawings:
FIG. 1 is a schematic, cross-sectional view of a dishwasher in accordance with various aspects of the description.
FIG. 2 is a schematic view of a controller of the dishwasher of FIG. 1.
FIG. 3 is a perspective view of a diverter assembly of the dishwasher of FIG. 1, including a cover.
FIG. 4 is an exploded perspective view of the diverter assembly of FIG. 3, excluding the cover.
FIG. 5 is a perspective view of the liquid diverter assembly of FIG. 3 shown assembled, but without the cover, to illustrate actuators used to move doors, which are shown in dashed line.
FIG. 6 is a schematic view of the diverter assembly of FIG. 3 in a first operational position of diverter assembly of FIG. 3.
FIG. 7 is a schematic view identical to FIG. 6, except showing the doors in a second operational position.
FIG. 8 is a schematic view identical to FIGS. 6 and 7, except showing the doors in a third operational position.

### DETAILED DESCRIPTION

Water-handling household appliances can require valves that enable a single pump to supply water to multiple outlets. Often, on-off valves or two-position valves are used to control the direction of water flow. Such valves are typically constructed of a rubber component used to block water flow in an unwanted direction and each valve requires one electrical output. Controlling multiple valves requires multiple electronic control devices which can be impractical due to the limited space available to house a number of control devices. Aspects of the present disclosure provide a solution to the technical problem of using a multi-way diverter valve in a water-handling household appliance where a single pump can supply water to multiple outlets using fewer actuators than the number of outlets. Such a structure is simple and compact. The water-handling household appliance can be any household or commercial appliance that requires a diverter valve to supply water to one or more outlets non-limiting examples of which include dishwasher; a horizontal or vertical axis clothes washer; a dryer; a combination washing machine and dryer; a tumbling or stationary refreshing/revitalizing machine; an extractor; a non-aqueous washing apparatus; and a revitalizing machine.

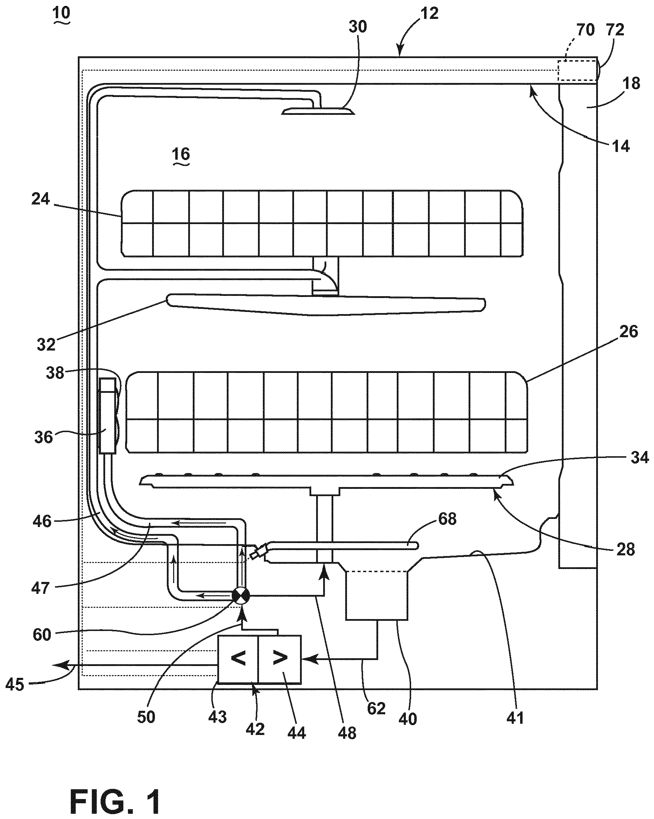

In FIG. 1, a water-handling household appliance in the form of an automated dishwasher 10. The dishwasher 10 shares many features of a conventional automated dishwasher, which will not be described in detail herein except as necessary for a complete understanding of the invention. A cabinet or chassis 12 can define an interior of the dishwasher 10 and can include a frame, with or without panels mounted to the frame. An open-faced tub 14 can be provided within the chassis 12 and can at least partially define a treating chamber 16, having an open face, for washing dishes. A door assembly 18 can be movably mounted to the dishwasher 10 for movement between opened and closed positions to selectively open and close the open face of the tub 14. Thus, the door assembly 18 provides accessibility to the treating chamber 16 for the loading and unloading of dishes or other washable items.

A closure element, such as the door assembly 18, can be movably mounted to the chassis 12 for movement between opened and closed positions to selectively open and close the treating chamber 16 access opening defined by the open face of the tub 14. Thus, the door assembly 18 provides accessibility to the treating chamber 16 for the loading and unloading of dishes or other washable items. It should be appreciated that the door assembly 18 can be secured to the lower front edge of the chassis 12 or to the lower front edge of the tub 14 via a hinge assembly (not shown) configured to pivot the door assembly 18. When the door assembly 18 is closed, user access to the treating chamber 16 can be prevented, whereas user access to the treating chamber 16 can be permitted when the door assembly 18 is open. Alternatively, the closure element can be slidable relative to the chassis 12, such as in a drawer-type dishwasher, wherein the access opening for the treating chamber 16 is formed by an open-top tub. Other configurations of the closure element relative to the chassis 12 and the tub 14 are also within the scope of the present disclosure.

Dish holders, illustrated in the form of upper and lower dish racks 24, 26, are located within the treating chamber 16 and receive dishes for treatment such as washing. The upper and lower racks 24, 26 are typically mounted for slidable movement in and out of the treating chamber 16 for ease of loading and unloading. Other dish holders can be provided, such as a silverware basket, separate from or integral with any of the racks. As used in this description, the term "dish(es)" is intended to be generic to any item, single or plural, that can be treated in the dishwasher 10, including, without limitation, dishes, plates, pots, bowls, pans, glassware, and silverware. While the dishwasher 10 is illustrated herein as having two dish racks 24, 26, it will be understood that any suitable number and configuration of dish racks is also within the scope of the present disclosure.

A spraying system 28 is provided for spraying liquid in the treating chamber 16 and is illustrated in the form of an upper sprayer 30, a mid-level sprayer 32, a lower rotatable spray arm 34, and a lower spray assembly 36. The upper sprayer 30 may be located above the upper rack 24 and is illustrated as a fixed spray nozzle that sprays liquid downwardly within the treating chamber 16. Mid-level rotatable sprayer 32 and lower rotatable spray arm 34 are located, respectively, beneath upper rack 24 and lower rack 26 and are illustrated as rotating spray arms. The mid-level spray arm 32 may provide a liquid spray upwardly through the bottom of the upper rack 24. The lower rotatable spray arm 34 may provide a liquid spray upwardly through the bottom of the lower rack 26. The mid-level rotatable sprayer 32 may optionally also provide a liquid spray downwardly onto the lower rack 26, but for purposes of simplification, this will not be illustrated herein. The lower spray assembly 36 is illustrated as including a vertically oriented distribution header or spray manifold 38. The spray manifold 38 is not be limited to this position; rather, the spray manifold 38 can be located in virtually any part of the treating chamber 16. While not illustrated herein, the spray manifold 38 can include multiple spray nozzles having apertures configured to spray wash liquid towards the lower rack 26. The spray nozzles may be fixed or rotatable with respect to the tub 14. Suitable spray manifolds are set forth in detail in U.S. Patent No. 7,445,013, filed June 17, 2003, and titled "Multiple Wash Zone Dishwasher," and U.S. Patent No. 7,523,758, filed December 30, 2004, and titled "Dishwasher Having Rotating Zone Wash Sprayer," both of which are incorporated herein by reference in their entirety.

A recirculation system is provided for recirculating liquid from the treating chamber 16 to the spraying system 28. The recirculation system can include a sump 40 and a pump assembly 42. The sump 40 collects the liquid sprayed in the treating chamber 16 and can be formed by a sloped or recess portion of a bottom wall 41 of the tub 14. The pump assembly 42 can include both a drain pump 43 and a recirculation pump 44. The drain pump 43 can draw liquid from the sump 40 via a sump conduit 62 and pump the liquid out of the dishwasher 10 through a drain conduit 45 to a household drain line (not shown). The recirculation pump 44 can draw liquid from the sump 40 through the sump conduit 62 and the liquid can be simultaneously or selectively pumped through a supply conduit 50, to a diverter assembly 60, through one or more supply tubes 46, 47, 48, to each of the assemblies 30, 32, 34, 36 for selective spraying. The supply tube 46 extends along a wall of the tub 14 and fluidly connects the pump assembly 42 to the upper sprayer 30 and the mid-level sprayer 32. The supply tube 47 fluidly connects the pump assembly 42 to the lower spray assembly 36. The supply tube 48 fluidly connects the pump assembly 42 to the lower rotatable spray arm 34. While the pump assembly 42 is illustrated as having two pumps 43, 44, alternatively, the pump assembly 42 can use just one pump. While not shown, a liquid supply system may include a water supply conduit coupled with a household water supply for supplying water to the sump 40.

A heating system including a heater 68 can be located within the sump 40 for heating the liquid contained in the sump 40. The heater 68 can also heat air contained in the treating chamber 16. Alternatively, a separate heating element (not shown) can be provided for heating the air circulated through the treating chamber 16. A filtering system (not shown) can be fluidly coupled with the recirculation flow path for filtering the recirculated liquid.

A control system including a controller 70 can also be included in the dishwasher 10, which can be operably coupled with various components of the dishwasher 10 to implement a cycle of operation. The controller 70 can be located within the door assembly 18 as illustrated, or it can alternatively be located somewhere within the chassis 12. The controller 70 can also be operably coupled with a control panel or user interface 72 for receiving user-selected inputs and communicating information to the user. The user interface 72 can include operational controls such as dials, lights, switches, and displays enabling a user to input commands, such as a cycle of operation, to the controller 70 and receive information.

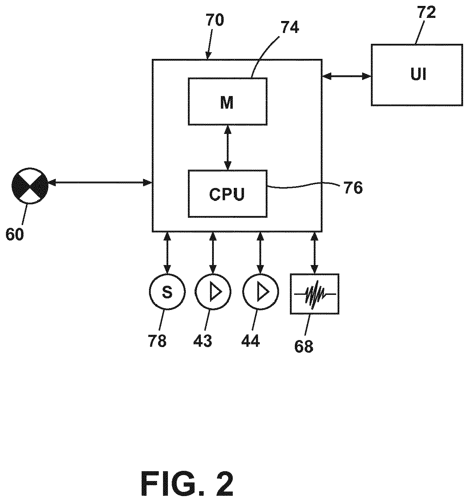

As illustrated schematically in FIG. 2, the controller 70 can be coupled with the heater 68 for heating the wash liquid during a cycle of operation, the drain pump 43 for draining liquid from the treating chamber 16, and the recirculation pump 44 for recirculating the wash liquid, and the diverter assembly 60 for selectively diverting the wash liquid during the cycle of operation. The controller 70 can be provided with a memory 74 and a central processing unit (CPU) 76. The memory 74 can be used for storing control software that can be executed by the CPU 76 in completing a cycle of operation using the dishwasher 10 and any additional software. For example, the memory 74 can store one or more pre-programmed cycles of operation that can be selected by a user and completed by the dishwasher 10. A cycle of operation for the dishwasher 10 can include one or more of the following steps: a wash step, a rinse step, and a drying step. The wash step can further include a pre-wash step and a main wash step. The rinse step can also include multiple steps such as one or more additional rinsing steps performed in addition to a first rinsing. The amounts of water and/or rinse aid used during each of the multiple rinse steps can be varied. The drying step can have a non-heated drying step (so called "air only"), a heated drying step, or a combination thereof. These multiple steps can also be performed by the dishwasher 10 in any desired combination.

The controller 70 can also receive input from one or more sensors 78. Non-limiting examples of sensors that can be communicably coupled with the controller 70 include a temperature sensor and turbidity sensor to determine the soil load associated with a selected grouping of dishes, such as the dishes associated with a particular area of the treating chamber 16.

The dishwasher 10 can include all of the above exemplary systems, a selection of the above exemplary systems, and/or other systems not listed above as desired. Further, some of the systems can be combined with other systems and/or can share components with other systems. Examples of other systems that the dishwasher 10 can further include are a dispensing system that supplies one or more treating agents or chemistries to the treating chamber 16 and an air supply system that can provide air, which can be heated or not heated, to the treating chamber 16, such as for drying and/or cooling the dishes. An exemplary air supply system is set forth in U.S. Patent Application No. 12/959,673, filed December 3, 2010, and published as U.S. Patent Application Publication No. 2012/0138106 on June 7, 2012, both of which are incorporated herein by reference in their entireties.

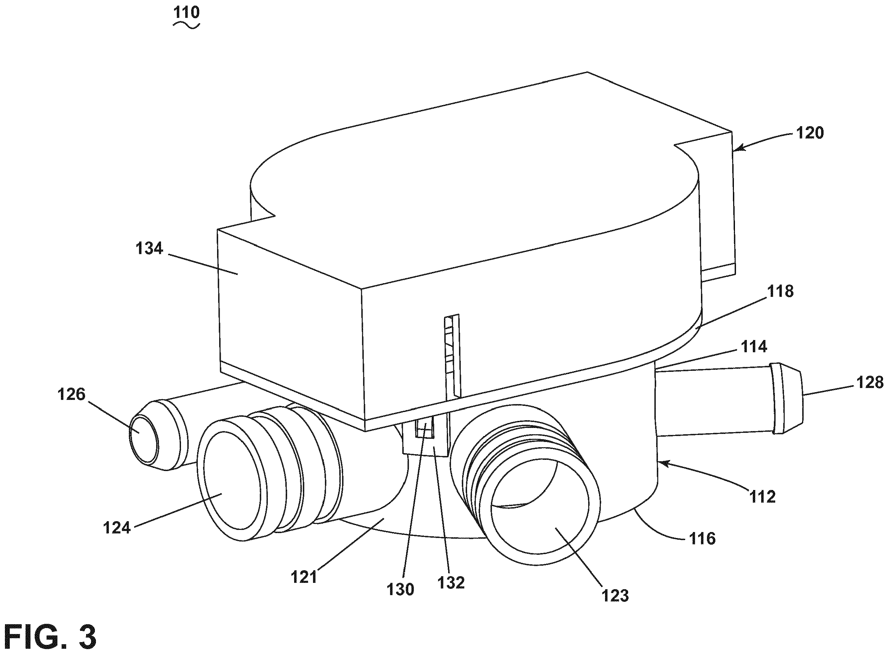

FIG. 3 is a perspective view of the diverter assembly 60 for the dishwasher 10 in the form of a multi-way diverter valve 110. While presently illustrated as fluidly connecting the recirculation pump 44 to the spray assemblies 30, 32, 34, 36, it is understood that the multi-way diverter valve 110 can be configured to enable a hydraulic connection between the sump 40 and/or the pump assembly 42 and any other elements of the dishwasher 10 that require fluid. The multi-way diverter valve 110 includes a housing 112 having an open upper end 114 and an opposing closed lower end 116, a base 118 closing the open end 114 of the housing 112, and a cover 120 received onto the base 118.

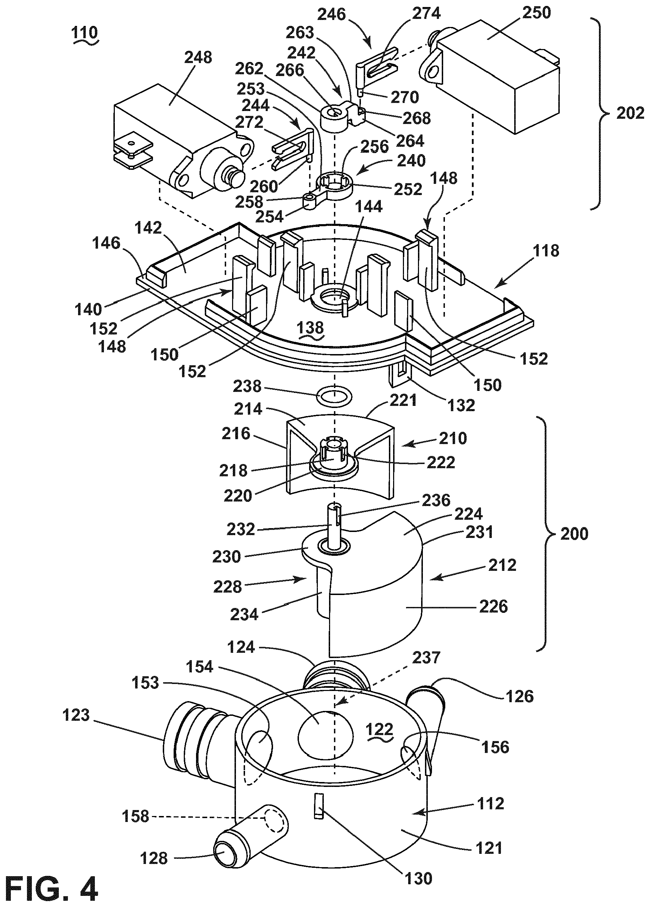

The housing 112 comprises a peripheral side wall 121 that defines an inner chamber 122 (FIG. 4). The peripheral side wall 121 can further include one or more conduits spaced along the peripheral side wall 121. As illustrated, the peripheral side wall 121 includes an inlet conduit 123, a first outlet conduit 124, a second outlet conduit 126, and a third outlet conduit 128. The inlet conduit 123 and outlet conduits 124, 126, and 128 can be of equal or varying sizes and are fluidly connected to the inner chamber 122.

A spring-tab in the form of a tab 130 on the housing 112 and a spring finger 132 on the base 118, which has an opening that receives the tab 130, secures the base 118 to the housing 112. Alternatively, the housing 112 and the base 118 can be fixedly or removably fastened by any suitable fastener for diverter valve bases including but not limited to latches, clasps, snap fittings, pressure fittings, gasket seals, or any other suitable mounting method.

The cover 120 can be received onto the base 118 such that a peripheral wall 134 of the cover 120 overlies the base 118 forming an interior 138 (FIG. 4). Optionally, the multi-way diverter valve 110 can include a locking mechanism (not shown) by which the cover 120 can be secured to the base 118 including but not limited to latches, clasps, snap fittings, pressure fittings, gasket seals, or any other suitable mounting method.

FIG. 4 is an exploded perspective view of the multi-way diverter valve 110 with the cover 120 removed for clarity. The base 118 includes an upper surface 142 from which extends a peripheral edge 140. A shaft aperture 144 is located in a generally central area of the base 118. The peripheral edge 140 in combination with the upper surface 142 can define a ledge or seat 146 configured to receive an edge of the cover 120. The base 118 further includes one or more actuator mounts 148 that can be provided by any number and configuration of supports, spring fingers, clips, positioning ribs, and/or posts configured to mount an actuator. As illustrated in FIG. 4, the actuator mount 148 can include one or more supports 150 and one or more spring fingers 152.

The multi-way diverter valve 110 can include a valve assembly 200 provided in the inner chamber 122 of the housing 112 and extending through the base 118, and a valve positioning assembly 202 provided in the interior 138 defined by the base 118 and the cover 120.

The valve assembly 200 can comprise one or more moveable doors 210, 212 configured to open and/or close one or more apertures provided in the inner chamber 122 at the intersection of the housing 112 and the conduits 123, 124, 126, and 128, which define an inlet 153 and outlets 154, 156, and 158. As illustrated, the number of doors 210, 212 is one less that the number of outlets that are to be selectively opened/closed. However, the number of doors is not limiting.

The first door 210 can include a circle sector portion 214, a wall 216, and a tube 218. The circle sector portion 214 is provided adjacent to the base 118 and includes a radial end 220 and an arcuate end 221 opposite the radial end 220. The wall 216 extends from the arcuate end 221 of the circle sector portion 214 and is provided adjacent to the peripheral wall 121 of the housing 112. The tube 218 extends upward in a vertical direction from a radial end 220 of the circle sector portion 214 and can have one or more keyways 222 radially spaced on the exterior of the tube 218.

The second door 212 can include a circle sector portion 224, a wall 226, and a shaft 228. The circle sector portion 224 is provided adjacent to the base 118 and includes a radial end 230 and an arcuate end 231 opposite the radial end 230. The wall 226 extends from the arcuate end 231 of the circle sector portion 224, and is provided adjacent to the peripheral wall 121 of the housing 112. The shaft 228 is generally cylindrical shaped and provided in a vertical direction from a radial end 230 of the circle sector portion 224. The shaft 228 includes an upper portion 232 extending vertically upward from the radial end 230 having one or more radially spaced keyways 236, and a lower portion 234 with a larger radius than the upper portion 232 extending vertically downward from the radial end 230, into the inner chamber 122 of the housing 112.

The valve assembly 200 is configured such that the tube 218 of the first door 210 receives the shaft 228 of the second door 212 to rotationally mount the first door 210 and the second door 212 about the vertical axis 237 defined by the shaft 228. The upper portion 232 of the shaft 228 extends vertically through and projects beyond the tube 218. In such a configuration, the radial end 220 of the first door 210 overlies the radial end 230 of the second door 212 and the radial ends 220, 230 can be in an abutting relationship or separated by suitable gaskets or O-rings. The tube 218 and the upper portion 232 of the shaft 228 extend together vertically through the aperture 144 of the base 118 such that the radial end 220 of the first door 210 abuts a lower surface of the base 118. Alternatively, the base 118 and the radial end 220 can be separated by suitable gaskets or O-rings, such as O-ring 238.

The valve positioning assembly 202 can comprise one or more lever arms operably coupled to an actuator by a reciprocating arm where the number of actuators provided corresponds to the number of moveable doors provided in the valve assembly 200. The valve positioning assembly 202 includes a first lever arm 240, a second lever arm 242, a first reciprocating arm 244, a second reciprocating arm 246, a first actuator 248, and a second actuator 250.

The first lever arm 240 comprises a collar 252 at a first end, and a coupling end 254 at a second end joined to the collar 252 by a leg 253. The collar 252 can include one or more radially spaced keys 256 provided on an interior of the collar 252 and configured to couple with the keyways 222 of the tube 218. The coupling end 254 includes an aperture 258 configured to receive a shaft 260 of the first reciprocating arm 244 to pivotally couple to the first lever arm 240 to the first reciprocating arm 244.

The second lever arm 242 comprises a collar 262 at a first end, and a coupling end 264 at a second end joined to the collar 262 by a stepped leg 263. The collar 262 can include one or more radially spaced keys 266 provided on an interior of the collar 262 and configured to couple with the keyways 236 of the shaft 228. The coupling end 264 includes an aperture 268 configured to receive a shaft 270 of the second reciprocating arm 246 to pivotally couple the second lever arm 242 to the second reciprocating arm 246.

The first reciprocating arm 244 further includes a connection slot 272 configured to receive the first actuator 248. The second reciprocating arm 246 further includes a connection slot 274 configured to receive the second actuator 250.

The first actuator 248 and the second actuator 250 can each be received in one of the actuator mounts 148 on the base 118 such that the actuator 248, 250 can set on the upper surface 142 of the base 118 while the three alignment supports 150 align the actuator 248, 250 while the two spring fingers 152 bias the actuators 248, 250 in place such that the actuators 248, 250 can be aligned to actuate in opposing directions. Alternatively, the first and/or second actuators 248, 250 can be mounted to the housing 112 or any other suitable location in the valve positioning assembly 202. Actuators 248, 250 can include but are not limited to linear actuators such as wax motors, or solenoids. The valve positioning assembly 202 can further include additional actuators such that the number of actuators provided in the valve positioning assembly 202 corresponds to the number of moveable doors provided in the valve assembly 200 and the actuators can be aligned to actuate in varying directions.

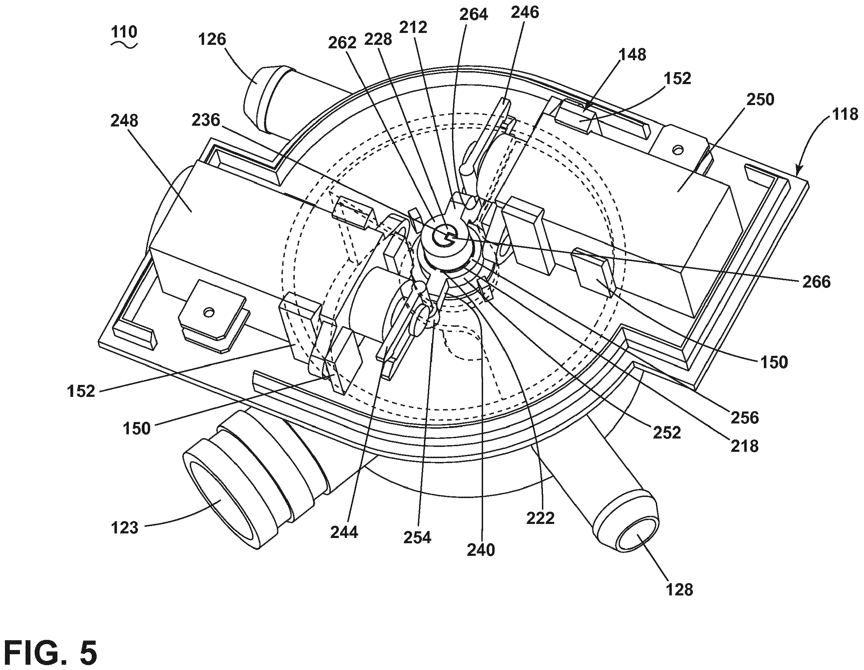

FIG. 5 illustrates the multi-way diverter valve 110 of FIG. 4 fully assembled, except for the cover 120, with the peripheral wall 121 and the first and second doors 210, 212 in dotted line for the purposes of clarity.

The first lever arm 240 and the first reciprocating arm 244 operably couple the first actuator 248 to the first door 210. The first lever arm 240 extends radially from the tube 218 overlying the base 118. The collar 252 receives the tube 218, and the radially spaced keys 256 on the collar 252 of the first lever arm 240 engage the keyways 222 of the tube 218 of the first door 210. The first reciprocating arm 244 pivotally couples with the first lever arm 240 at the coupling end 254. The first reciprocating arm 244 operably couples to the first actuator 248 such that actuation of the first actuator 248 reciprocates the first reciprocating arm 244 to result in a rotation of the first lever arm 240 which in turn rotates the tube 218 of the first door 210 about the shaft 228.

The second lever arm 242 and the second reciprocating arm 246 operably couple the second actuator 250 to the second door 212. The second lever arm 242 is provided above the first lever arm 240 of the shaft 228. The second lever arm 242 extends radially from the shaft 228 overlying portions of the first lever arm 240 and the base 118. The collar 262 of the second lever arm 242 receives the shaft 228, and the key 266 engages with the keyway 236 of the shaft 228 of the second door 212. The second reciprocating arm 246 pivotally couples with the second lever arm 242 at the coupling end 264 of the second lever arm 242. The second reciprocating arm 246 operably couples to the second actuator 250 such that actuation of the second actuator 250 reciprocates the second reciprocating arm 246 to result in a rotation of the second lever arm 242 which in turn rotates the shaft 228 of the second door 212 inside the tube 218.

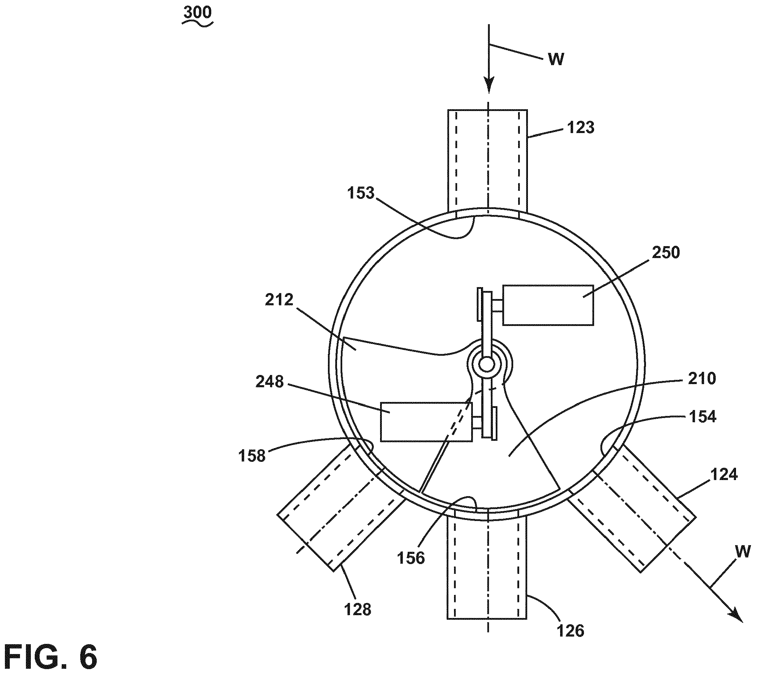

The first actuator 248 operably couples to the first door 210 and the second actuator 250 couples to the second door 212 such that selective actuation of one or both actuators 248, 250 by the controller 70 results in selective movement of one or both of the corresponding doors 210, 212. The first and second doors 210, 212 of the valve assembly 200 are configured to block one or more of the outlets 154, 156, 158 in a starting operational position. The doors 210, 212 are configured to rotate about the shaft 228 provided in the housing 112 by activation of the one or more actuators 248, 250 of the valve positioning assembly 202 mounted to the housing 112 such that selective actuation of one or more of the actuators 248, 250 selectively rotates the corresponding door 210, 212 to a different position to block a different outlet, collectively establishing another operational position of the valve assembly 200. The number of operational positions of the valve assembly 200 generally corresponds to the number of outlets present in the multi-way diverter valve 110. While FIGs. 6-8 illustrate the operational positions of the valve assembly 200 in one aspect of the present disclosure, it is understood that selective actuation of one or more actuators present in a valve positioning assembly can result in opening any one or more outlets provided to the multi-way diverter valve while collectively closing, or blocking, the other one or more outlets.

FIG. 6 illustrates a schematic view of a first operational position 300 of the valve assembly 200. In the first operational position 300, neither first actuator 248, nor second actuator 250 of the valve positioning assembly 202 is activated. The first door 210 is in a first position where the first door 210 blocks the second outlet 156. The second door 212 is in a third position where the second door 212 blocks the third outlet 158. The inlet 153 and the first outlet 154 remain open to water flow as illustrated by the arrows W.

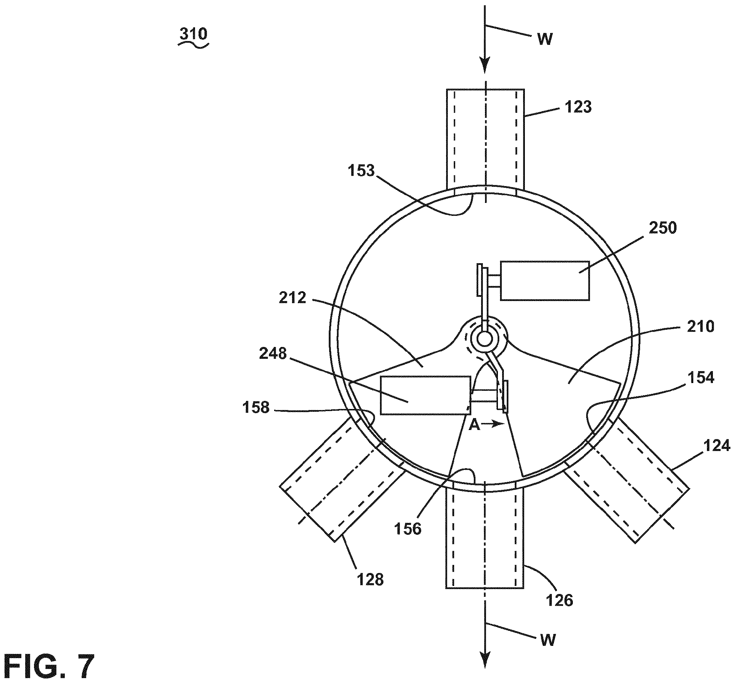

FIG. 7 illustrates a schematic view of a second operational position 310 of the valve assembly 200. In the second operational position 310, actuation of the first actuator 248 in a direction A rotates the first door 210 to a second position where actuation of the first door 210 opens the second outlet 156 and blocks the first outlet 154. The second door 212 remains in the third position, blocking the third outlet 158. The inlet 153 and the second outlet 156 remain open to water flow as illustrated by the arrows W.

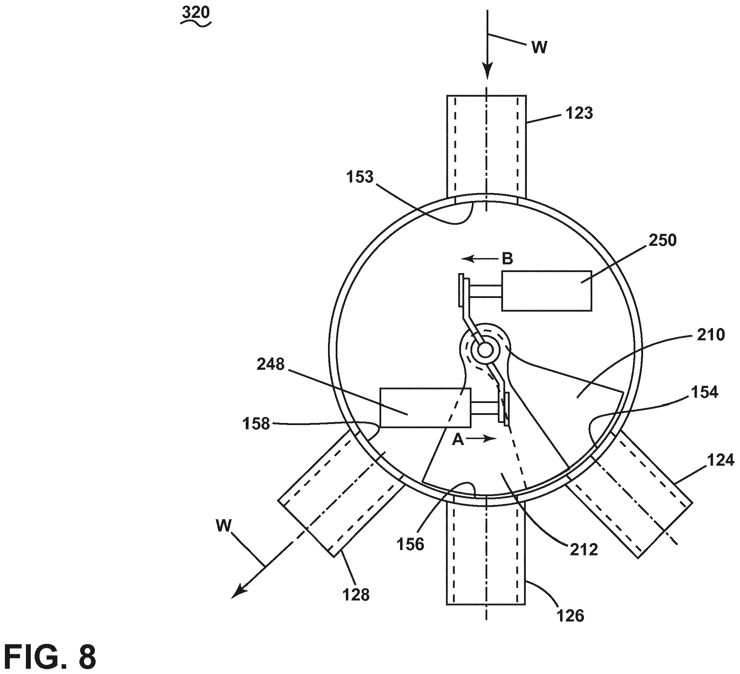

FIG. 8 illustrates a schematic view of a third operational position 320 of the valve assembly 200. In the third operational position 320, the first actuator 248 remains activated in the direction A such that the first door 210 remains rotated to the second position, blocking the first outlet 154. Actuation of the second actuator 250 in a direction B rotates the second door 212 to a fourth position where actuation of the second door 212 opens the third outlet 158 and blocks the second outlet 156. The inlet 153 and the third outlet 158 remain open to water flow as illustrated by the arrows W.

The multi-way diverter valve and related systems, components, and methodologies are described herein in relation to a laundry treating appliance in the form of a washing machine or dryer, in the same manner, for treating fabric articles according to a cycle of operation. The washing machine can be a household or commercial appliance. It should be appreciated, however, that the multi-way diverter valve and related systems, components, and methodologies as described herein are not so limited and can have equal applicability to additional appliances, non-limiting examples of which include a horizontal or vertical axis clothes washer; a dryer; a combination washing machine and dryer; a tumbling or stationary refreshing/revitalizing machine; an extractor; a non-aqueous washing apparatus; and a revitalizing machine.

To the extent not already described, the different features and structures of the various aspects can be used in combination with each other as desired. That one feature cannot be illustrated in all of the aspects is not meant to be construed that it cannot be, but is done for brevity of description. Thus, the various features of the different aspects can be mixed and matched as desired to form new aspects, whether or not the new aspects are expressly described. Combinations or permutations of features described herein are covered by this disclosure.

This written description uses examples to disclose aspects of the disclosure, including the best mode, and also to enable any person skilled in the art to practice aspects of the disclosure, including making and using any devices or systems and performing any incorporated methods. While aspects of the disclosure have been specifically described in connection with certain specific details thereof, it is to be understood that this is by way of illustration and not of limitation. Reasonable variation and modification are possible within the scope of the forgoing disclosure and drawings without departing from the spirit of the disclosure, which is defined in the appended claims.

## Claims

1. A multi-way diverter valve (110) comprising:
a housing (112) having a peripheral side wall (121) defining an inner chamber (122), with an inlet (153) and at least first (154), second (156), and third (158) outlets located in and radially spaced along the peripheral side wall (121);
first (210) and second (212) doors located within and radially mounted to the housing (112);
a first actuator (248) operably coupled to the first door (210) to move the first door (210) between a first position, where the first door (210) blocks the second outlet (156), and a second position, where the first door (210) blocks the first outlet (154);
a second actuator (250) operably coupled to the second door (212) to move the second door (212) between a third position, where the second door (212) blocks the third outlet (158), and a fourth position, where the second door (212) blocks the second outlet (156);
whereby the first (248) and second (250) actuators can be selectively actuated such that:
the first door (210) is in the first position and the second door (212) is in the third position to collectively open the first outlet (154) while blocking the second (156) and third (158) outlets,
the first door (210) is in the second position and the second door (212) is in the third position to collectively open the second outlet (156) while blocking the first (154) and third outlets (158), and
the first door (210) is in the second position and the second door (212) is in the fourth position to collectively open the third outlet (158) while blocking the first (154) and second outlets (156).

2. The multi-way diverter valve of claim 1 further comprising a shaft located in the housing (112) and the first (210) and second doors (212) are rotatably mounted to the shaft (228).

3. The multi-way diverter valve (110) of any preceding claim, wherein the housing (112) has a closed end (116) and an open end (114), with the shaft (228) extending upwardly from the closed end (116).

4. The multi-way diverter valve (110) of any preceding claim, further comprising a base (118) closing the open end (114).

5. The multi-way diverter valve (110) of any preceding claim, wherein at least one of the first (248) and second (250) actuators is mounted to the base (118).

6. The multi-way diverter valve (110) of any of claims 2-5, wherein the shaft (228) extends through the base (118).

7. The multi-way diverter valve (110) of claims 4-6, wherein at least one of the first (210) and second (212) doors comprises a tube (218) that receives the shaft (228) to rotationally mount the at least one of the first (210) and second doors (212) to the shaft (228).

8. The multi-way diverter valve (110) of claim 7, wherein the tube (218) extends above the base (118).

9. The multi-way diverter valve (110) of any preceding claim, further comprising a lever arm (240, 242) radially extending from the tube (218) and overlying the base (118).

10. The multi-way diverter valve (110) of claim 9, wherein the at least one of the first (248) and second (250) actuators mounted to the base (118) has a reciprocating arm (244, 246) that is connected to the lever arm (240, 242), such that reciprocation of the reciprocating arm (244, 246) results in a rotation of the lever arm (240, 242).

11. The multi-way diverter valve (110) of claim 10, wherein the at least one of the first (210) and second doors (212) comprises a sector portion (214, 224) located adjacent the base (118) and a wall (216, 226) located adjacent the peripheral wall (121).

12. The multi-way diverter valve (110) of claim 11, wherein the peripheral wall (121) defines a circle.

13. A multi-way diverter valve (110) comprising:
a housing (112) defining a chamber (122) and having an inlet (153) and at least three outlets (154, 156, 158) fluidly coupled to the chamber (122);
doors (210, 212), one less in number than the number of the at least three outlets (154, 156, 158), and moveable relative to the at least three outlets (154, 156, 158); and
actuators (248, 250), corresponding in number to the number of doors (210, 212), with each actuator (248, 250) operably coupled to a corresponding, but different, door (210, 212) to move the corresponding door (210, 212) to selectively block adjacent outlets (154, 156, 158) of the at least three outlets (154, 156, 158);
whereby the doors (210, 212) are located such that selectively actuation of the actuators (248, 250) can result in any one of the outlets (154, 156, 158) being open while the other outlets (154, 156, 158) are blocked by the doors (210, 212).

14. The multi-way diverter valve (110) of claim 13, further comprising a shaft (228) located in the housing (112) and the doors (210, 212) are rotatably mounted to the shaft (228) and at least one of the doors (210, 212) comprises a tube (218) that receives the shaft (228) to rotationally mount the at least one of the doors (210, 212) to the shaft (228).

15. The multi-way diverter valve (110) of claim 13, wherein all of the actuators (248, 250) are mounted to the housing (112) and the doors (210, 212) are located within the chamber (122).
